# EUROPEAN PATENT SPECIFICATION

(11) **EP 2 571 407 B1**
(45) Date of publication and mention of the grant of the patent: **16.04.2014**
(21) Application number: 11720519.5
(22) Date of filing: 20.05.2011
(51) Int. Cl.: A47J 31/44

(54) **STORABLE HOT WATER OR STEAM DELIVERY DEVICE**
LAGERFÄHIGE WARMWASSER- ODER DAMPFAUSGABEVORRICHTUNG
DISPOSITIF DE FOURNITURE D'EAU CHAUDE OU DE VAPEUR STOCKABLE

(30) Priority: 21.05.2010 EP 10163638
(43) Date of publication of application: 27.03.2013
(73) Proprietor: Nestec S.A., 1800 Vevey (CH)
(72) Inventor: TURCHI, Daniel, 1094 Paudex (CH); CAHEN, Antoine, 1005 Lausanne (CH)
(74) Representative: Schnyder, Frank Simon
(86) International application number: PCT/EP2011/058225
(87) International publication number: WO 2011/144722

(56) References cited:
- EP-A1- 2 080 458
- EP-A1- 2 163 176
- FR-A1- 2 879 426
- FR-A1- 2 929 091

## Description

### Field of the Invention

The field of the invention pertains to machines for preparing beverages having a hot water and/or steam delivery device. In particular, the field of the invention pertains to machines for preparing a beverage by circulating a fluid through a flavouring ingredient, in particular supplied within a capsule, to form the beverage and having a hot water and/or steam outlet.

For the purpose of the present description, a "beverage" is meant to include any liquid food, such as tea, coffee, hot or cold chocolate, milk, soup, baby food, etc... A "capsule" is meant to include any pre-portioned beverage ingredient within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Machines for producing beverages such as milk-containing beverages, e.g. milk-containing coffee, tea or chocolate drinks are well known in the art.

As known in the art, in order to produce such a beverage, water may be passed via a heater for producing hot water and/or steam and dispensed via a corresponding pipe into a user-cup or mug. For example, such hot water dispensing may be used for preparing tea. Hot steam dispensing may be involved in a milk frothing process, i.e. by injecting hot steam in a recipient containing milk which is thus heated and emulsified under the effect of the injected steam, in particular while moving the recipient relative to the injected steam, e.g. by applying a traditional "barista" milk frothing technique.

Such hot water and/or steam dispensing pipes may typically be incorporated into flavoured beverage machines, in particular coffee machines, e.g. for the preparation of cappuccinos or caffè latte.

For instance, EP 1 764 014 and EP 1 900 312 disclose coffee machines having a water circuit with an outlet for delivering hot water and/or steam. EP 097 481 discloses another beverage preparation machine having a steam outlet and a hot water outlet.

DE 196 11 450, EP 0 607 759, EP 1 501 398, EP 1 776 905, WO 2007/09577 disclose air-steam lances for immersion into a milk cup.

WO 2008/034708 discloses a coffee machine having a coffee outlet and a steam outlet that can be brought into a position for the delivery of fluid into the same user-cup, the coffee outlet being horizontally movable to the steam outlet.

US 6,293,187 discloses a steam pipe that is vertically displaceable for automatically moving its outlet in a cup for frothing milk contained therein. The steam pipe has an exchangeable nozzle member with an outlet that comes into contact with the milk. FR 2929091 discloses a beverage preparation machine with an outlet for delivering hot water and/or steam.

Hot water and/or steam generation circuits tend to accumulate scale deposited from water during use. If this scale is not removed, the circuit gets clogged and cannot be used anymore. It is known to maintain machines having such circuits by cleaning and/or descaling processes during which a cleaning/descaling fluid, e.g. water carrying a descaling agent, is circulated through the circuit and usually collected in a cup, mug or other servicing recipient placed underneath an outlet of the circuit.

There is still a need to provide a simple hot water and/or steam delivery arrangement in particular with a safe maintenance arrangement.

### Summary of the Invention

The invention thus relates to a machine for preparing a beverage. The machine includes: a body with an opening; and a hot water and/or steam generator comprising a movable outlet. The generator and the outlet has an operative configuration for delivering via the outlet hot water and/or steam.

The body may form the machine's housing or a part thereof. Typically, the machine has a hot water and/or steam delivery area for delivering such hot water and/or steam from the generator's outlet into a user-cup or user-mug. The cup or mug may be positioned in a delivery area that is normally external to the body and/or handheld and optionally moved relative to the hot water and/or steam outlet, e.g. for frothing milk contained in the cup or mug.

In accordance with the invention the generator has a storage configuration in which the outlet of the generator is moved and received in the opening of the body.

Hence, the machine has a simple configuration for storing, typically securing, the movable outlet of a hot water and/or steam generator by moving it into an opening of the machine's body. Thereby, the freedom of movement of the outlet is reduced and/or any fluid delivered via the outlet is confined in the body via its opening.

Such a storing configuration may be appropriate when the machine or at least the generator is inactive, e.g. stored or simply not used in a beverage preparation process, and/or when the generator is in a cleaning process, in particular a descaling process, to prevent uncontrolled fluid projections from the generator's outlet and confining such fluid in particular in the machine's body.

It follows that the body may comprise a reservoir for collecting waste liquid. The reservoir may be used to collect fluid delivered via the opening of the generator. Such fluid may be delivered from the generator's outlet and include a cleaning fluid during a cleaning process and/or drips originating from a previous hot water and/or steam delivery process.

The body may be removable typically for emptying and/or cleaning the reservoir. The machine may have a main body containing the active parts, e.g. heater and control unit, and a second body such as a removable body containing the opening for receiving the outlet of the hot water and/or steam generator. The latter body may be mechanically connected to the main body and disconnectable therefrom by the user, e.g. for servicing.

In one embodiment, the body for receiving the generator's outlet delimits a beverage dispensing area. The body may comprise an upper face for supporting a user-cup and/or a user-mug into which hot water and/or steam may be delivered. The upper face of the body can be formed by an arrangement for evacuating waste liquid, such as a grid or one or more channels leading into a waste liquid reservoir. Hence, the body may form a drip tray device of the beverage preparation machine.

The body for receiving the generator's outlet forms a platform projecting from such machine. The opening for the outlet can be located in an upper face of the body, in particular on a peripheral part of the upper face. The central part of the platform may serve to position a user-cup or user-mug thereon.

Usually, the hot water and/or steam generator may comprise a user-movable tube bearing the generator's outlet. Motion of the tube would normally cause motion of its outlet. The tube may be manually movable by a user into the operative configuration and into the storage configuration. Motion of the tube may also be automatic by using a motor. The tube can be generally upright in the storage configuration. The tube may be longitudinally movable, optionally telescopically movable, in particular longitudinally movable into the body for receiving the tube's outlet. The tube can be pivotable, usually pivotally mounted outside the machine's body or a machine's housing. The tube may be pivoted and/or longitudinally moved from the storage position into its operative configuration for delivering hot water and/or steam.

The water and/or steam generator can have a cleaning configuration, e.g. a descaling configuration, in which the outlet of the generator is moved and received in the opening of the body. The position of the generator's outlet, and the tube when present, in the cleaning configuration, such as the descaling configuration, can be the same as in the storage configuration. The cleaning configuration is typically arranged for circulating cleaning fluid, such as a descaling fluid, from the generator into the body via the outlet of the generator and opening of the body. To increase safety and/or proper operation, the machine may include a control unit arranged, e.g. programmed, to prevent cleaning, e.g. descaling, when the outlet of the generator is away from the opening in the body. For instance, the machine includes a sensor for detecting the position of the generator's outlet, at least in the storage and/or cleaning configuration.

A control unit may also be provided to prevent beverage preparation involving hot water and/or steam delivery via the generator's outlet when the generator is in the cleaning configuration and/or in the storage configuration.

The beverage preparation machine may further comprise a flavoured beverage preparation module, such as a module for receiving a flavoured ingredient, in particular a capsule containing the flavoured ingredient, and for circulating water through the flavoured ingredient to form a flavoured beverage. For instance, the machine is a coffee, tea or soup machine.

The machine may be arranged for preparing within a brewing unit a beverage by passing hot or cold water or another liquid through a capsule containing a flavouring ingredient of the beverage to be prepared, such as ground coffee or tea or chocolate or cacao or milk powder.

### Brief Description of the Drawings

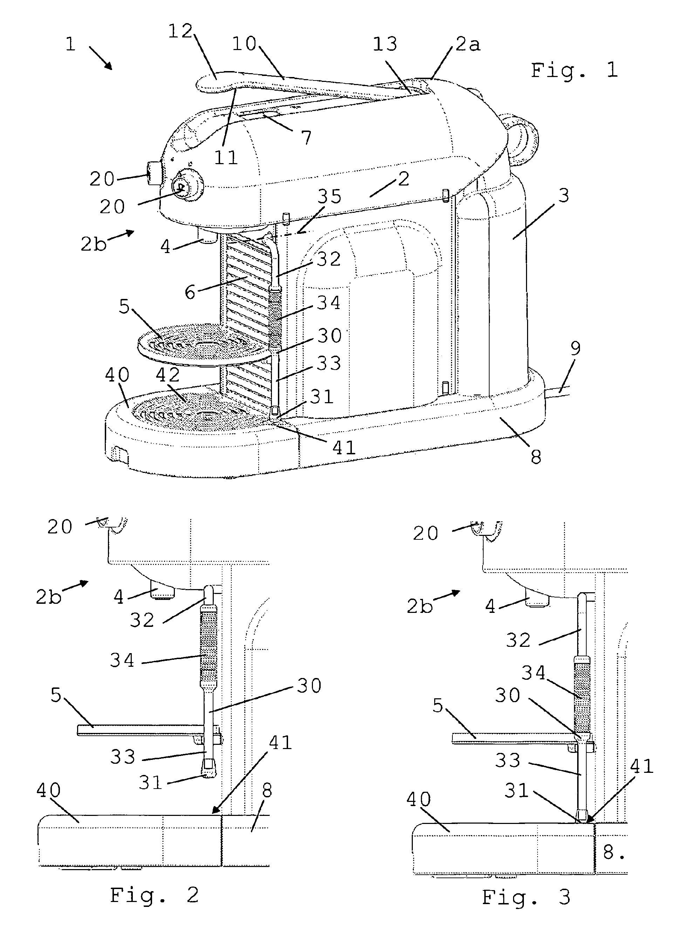

The invention will now be described with reference to the schematic drawings, wherein Figures 1 to 3 illustrate an embodiment of a beverage machine according to the invention.

### Detailed description

Figure 1 shows a perspective view of an embodiment of a beverage preparation machine 1 according to the invention. Figures 2 and 3 illustrate a side view of a front part of machine 1 in two different configurations.

Machine 1 can be electrically powered, typically by the mains, via an electric cord 9.

Machine 1 has an internal beverage preparation module covered by a housing 2. The beverage preparation module is arranged for holding a flavouring ingredient, in particular a pre-portioned ingredient such as an ingredient supplied to such module within a capsule, and circulating a liquid therethrough to form the beverage.

The liquid, e.g. water, may be stored and supplied to the beverage preparation module from a tank 3. The beverage, upon formation, can be dispensed via an outlet 4 to a dispensing area 5,40, e.g. a support for holding a user cup or mug. The dispensing area may include a first cup support 5, e.g. a support for espresso cups, that is movable away from under outlet 4 so as to give access to a lower second cup support 40 for larger cups or mugs, e.g. for dispensing lungos or extra-large beverages. The lower cup support 40 may be connected to a base 8 of machine 1. Suitable movable cup supports are for example disclosed in EP 1867260 and in WO 2009/074557, the contents of which are hereby incorporated by way of reference.

Machine 1 also includes a steam and/or hot water generator for delivering such steam and/or hot water via an opening 31 of tube 30, e.g. for the preparation of frothed milk and/or tea.

Adjacent to the beverage preparation module, machine 1 may have a collector 6 for used flavouring ingredient, e.g. ground coffee or tea upon brewing, for instance contained within capsules. Collector 6 may be positioned underneath the beverage preparation module to collect upon beverage preparation the used flavouring ingredient evacuated to collector 6, e.g. by gravity. Suitable collectors are for example disclosed in WO 2009/074559 and in WO 2009/135869, which are hereby incorporated by way of reference.

Machine 1 has a handle 10 movable between: a transfer position for loading the ingredient, e.g. within a capsule, into the module and/or evacuating such ingredient from the module; and a circulation position for circulating the liquid through the ingredient.

Typically, handle 10 actuates an ingredient holder with an ingredient chamber, such as a brewing unit, of the beverage preparation module from: a transfer position (not shown) for insertion of the flavouring ingredient into the holder and/or evacuation of this ingredient therefrom; and a circulation position for circulating the liquid through this ingredient in the ingredient holder to form the beverage. Typically, the ingredient holder, e.g. a brewing unit, has two relatively movable parts that are moved apart for opening the ingredient holder into the transfer position and moved together for closing the ingredient holder into the circulation position. In the circulation position (not shown), the ingredient holder may tightly enclose the flavouring ingredient to ensure proper guidance of the liquid through the ingredient.

In the circulation position, handle 10 may rest on or in a top face 2a of machine 1. In particular handle 10 can be flush with housing 2.

As shown in Fig. 1, handle 10 can be a single-arm lever generally shaped as a straight bar that is slightly curved or bent at its extremity 11 for ergonomic reasons, namely for facilitating the manual application of force onto handle 10 by a convenient orientation of contact surface 12 for a user's hand when handle 10 is moved from the transfer position to the circulation position. In the circulation position, handle 10 with its extremity 11 may be flush with housing 2 that has a corresponding shape, e.g. to facilitate cleaning of the surface of housing 2.

Hence, handle 10 has a drive portion 12 arranged to be contacted and driven by a human hand to move the handle between the transfer position in which the flavouring ingredient, e.g. enclosed in a capsule, is inserted into the beverage preparation module for instance via a passage 7, and the circulation position in which the flavouring ingredient is housed in the beverage preparation module and liquid may be circulated therethrough to form the beverage.

Fig. 1 shows handle 10 in an intermediate position between the transfer position and the circulation position. In the transfer position, handle 10 entirely uncovers passage 7 for allowing the insertion of the flavouring ingredient, e.g. within a capsule, into the beverage preparation module.

Passage 7 can be arranged for introduction by gravity of the flavouring ingredient into the beverage preparation module, drive portion 12 being located generally above and/or adjacent passage 7 when handle 10 is in the transfer position to facilitate the coordination between manual introduction of a flavouring ingredient, e.g. within a capsule, into passage 7 and manually actuating handle 10, in particular allowing the user to use the same hand.

Furthermore, machine 1 includes a user-interface 20 for initiating circulation of the liquid through the flavouring ingredient in the beverage preparation module.

The beverage preparation module typically includes one or more of the following components:
a) the ingredient holder, such as a brewing unit, for receiving the flavouring ingredient of this beverage, in particular a pre-portioned ingredient supplied within a capsule, and for guiding an incoming flow of liquid, such as water, through this ingredient to beverage outlet 4;
b) an in-line heater, such as a thermoblock, for heating this flow of liquid to be supplied to the ingredient holder;
c) a pump for pumping this liquid through the in-line heater;
d) one or more fluid connecting members for guiding this liquid from a source of liquid, such as tank 3 of liquid, to beverage outlet 4;
e) an electric control unit, in particular comprising a printed circuit board (PCB), for receiving instructions from a user via an interface and for controlling the in-line heater and the pump; and
f) one or more electric sensors for sensing at least one operational characteristic selected from characteristics of the ingredient holder, the in-line heater, the pump, liquid reservoir 3, ingredient collector 6, a flow of this liquid, a pressure of this liquid and a temperature of this liquid , and for communicating such characteristic(s) to the control unit.

The heater may be a thermoblock or an on demand heater (ODH), for instance an ODH type disclosed in EP 1 253 844, EP 1 380 243 and EP 1 809 151. Examples of suitable brewing units and capsule management are for example disclosed in WO 2005/004683, WO2007/135136 and WO 2009/043630, which are hereby incorporated by way of reference. Suitable beverage preparation modules are for instance disclosed in WO 2009/074550 and WO 2009/130099 which are hereby incorporated by way of reference.

Handle 10 and user-interface 20 can be arranged so that user-interface 20 is operable by a human hand while the hand is still in contact with drive portion 12 of handle 10 upon driving handle 10 into the circulation position, as illustrated in Fig. 2.

For instance, drive portion 12 is contacted and actuatable by one or more of the index finger, middle finger, ring finger and little finger, user-interface 20 being operable by the hand's thumb while the finger(s) is/are still in contact with handle 10, i.e. without having to move the hand away from handle 10 after moving handle 10 into its circulation position. For convenience, drive portion 12 may have a surface or profile specially adapted for being hand driven, e.g. the surface of drive portion 12 may include a means, such as a surface structure or composition, in particular an anti-skid surface that provides friction against the hand.

Drive portion 12 can be arranged to be pushed by a human hand for driving handle 10. User-interface 20 is operable by the same hand while it is still in a pushing position against drive portion 12 upon driving handle 10 into the circulation position.

User-interface 20 may include a plurality of user selectors for initiating preparation of beverages of different flavours and/or of different sizes and/or different types. For instance, user-interface 20 includes a first user-selector and a second user-selector, e.g. in the form of push-buttons, for selecting the dispensing of espresso coffee and of lungo coffee.

Machine 1 illustrated in Figs 1 to 3 has a front face 2b bearing outlet 4 for delivering the beverage, user-interface 20 being located on or adjacent to front face 2b. In particular, user interface 20 is located below drive portion 12 to be easily accessible by the user's hand while still in position on drive portion 12 on handle 10 upon reaching the handle's circulation position. For instance, when handle 10 is in the circulation position, user-interface 20 is spaced from drive portion 12 by a distance in the range of 2 to 4 cm.

Drive portion 12 may form a part of least counter-force of handle 10 against an actuating human hand while driving handle 10. For instance, handle 10 is arranged to pivot at a first end portion 13 thereof and drive portion 12 is located at the opposite end of handle 10 so that the lever arm is maximised and the manual applied force necessary to vanquish the counter-force of the system is minimised.

The specific embodiment of machine 1 illustrated in Figs 1 to 3 will now be described with particular emphasis on its hot water and/or steam generation arrangement.

As mentioned above, machine 1 includes a body 40, which in this particular embodiment forms a cup support, that has an opening 41.

Body 40 forms a platform projecting from machine 1. Body 40 is mechanically connected to foot 8 of machine 1. This body could be integral or permanently fixed with this foot and/or with the machine's housing 2. An example of this kind of projecting body is illustrated in WO 2009/074550, the content of which is hereby incorporated by way of reference.

The hot water and/or steam generator comprises a movable outlet 31. The generator with its outlet has an operative configuration for the delivery of hot water and/or steam into a user-cup and/or user-mug (not shown), e.g. placed on body 40 that forms a cup support.

In accordance with the invention, the generator has a storage configuration in which the outlet 31 of the generator is moved and received in opening 41 of the body 40, as illustrated in Fig. 3.

Opening 41 for outlet 31 can be located in an upper face 42 of body 40, in particular on a peripheral part of the upper face, or adjacent thereto.

Body 40 typically includes or forms a reservoir for collecting waste liquid. Hence, drips from outlet 31, e.g. after a hot water and/or steam delivery, can be collected in body 40. Body 40 can be removable, in particular for cleaning and/or emptying the reservoir.

In a preferred embodiment, the water and/or steam generator has a cleaning configuration, such as a descaling configuration, in which outlet 31 of the generator is moved and received in opening 41 of body 40.

Machine 1 may have a control unit arranged to prevent cleaning, such as descaling, when outlet 31 of the generator is away from opening 41 in body 40.

Body 40 can delimit a beverage dispensing area. As illustrated in Figs 1 to 3, beverage outlet 4 is located generally vertically above body 40. Hence, a user-cup or mug (not shown) can be placed on an upper face 42 of body 40 for collecting beverage dispensed via outlet 4.

In the particular embodiment illustrated in these Figures, support 5 should be moved away from underneath outlet 4 before positioning a cup or mug under outlet 4, for instance as disclosed in EP 1 867 260, the content of which is hereby incorporated by way of reference.

Upper face 42 is formed by a grid positioned above the reservoir for collecting fluids from outlet 31 and waste drops from outlet 4. Hence, upper face 42 is formed by an arrangement, in particular this grid, for evacuating waste liquid into the waste liquid reservoir, e.g. located underneath face 42.

In the embodiment illustrated in Figs 1 to 3, the hot water and/or steam generator includes a user-movable tube 31 bearing outlet 31 at its extremity. Tube 31 can be manually movable by a user into the operative configuration and into the storage configuration. Tube 30 may be generally upright in the storage configuration.

Tube 30 can be longitudinally movable. In particular, tube 30 includes an upstream section 32 and a downstream section 33 that are telescopically arranged so that downstream section 33 can be moved longitudinally relative to upstream section 32. Downstream section 33 has a sleeve 34 that is arranged to slide over upstream section 32 for adjusting the length of tube 30. Downstream section 33 bears outlet 31 opposite sleeve 34.

Moreover, tube 30 is pivotally mounted to machine 1. In particular, section 32 is rotatably mounted about a generally horizontal axis 35 whereby outlet 31 can be pivoted outwardly away from body 40 so that steam or hot water can be passed into a cup or mug held, e.g. handheld, on the side of machine 1. Alternatively, the steam or hot water tube can be made to be pivotable or otherwise movable inwardly above body 40 for passing steam or hot water into a cup or mug positioned on support 5 or body 40.

## Claims

1. A beverage preparation machine (1) having:
- a body (40) with an opening (41); and
- a hot water and/or steam generator comprising a movable outlet (31),
the generator and the outlet having:
- an operative configuration for delivering via the outlet hot water and/or steam; and
- a storage configuration in which the outlet of the generator is moved and received in the opening of the body,
**characterized in that** the body (40) forms a platform projecting from such machine (1) for receiving the generator's outlet.

2. The machine of claim 1, wherein the body (40) comprises a reservoir for collecting waste liquid, the body being in particular removable.

3. The machine of claim 1 or 2, wherein the body (40) delimits a beverage dispensing area.

4. The machine of claim 3, wherein the body (40) comprises an upper face (42) for supporting a user-cup and/or a user-mug.

5. The machine of claim 4, wherein the upper face (42) of the body (40) is formed by an arrangement for evacuating waste liquid, such as a grid or one or more channels leading into a waste liquid reservoir.

6. The machine of any preceding claim, wherein the opening (41) for the outlet (31) is located in an upper face (42) of the body (40) or adjacent thereto.

7. The machine of claim 6, wherein the wherein the opening (41) for the outlet (31) is located on a peripheral part of the upper face or adjacent thereto.

8. The machine of any preceding claim, wherein the hot water and/or steam generator comprises a user-movable tube (30) bearing said outlet (31).

9. The machine of claim 8, wherein the tube (30) is manually movable by a user into the operative configuration and into the storage configuration.

10. The machine of claim 8 or 9, wherein the tube (30) is generally upright in the storage configuration.

11. The machine of any one of claims 8 to 10, wherein the tube (30) is longitudinally movable, in particular telescopically movable.

12. The machine of any one of claims 8 to 11, wherein the tube (30) is pivotable.

13. The machine of any preceding claim, wherein the water and/or steam generator has a cleaning configuration, such as a descaling configuration, in which the outlet (31) of the generator is moved and received in the opening (41) of the body (40).

14. The machine of claim 13, which comprises a control unit arranged to prevent cleaning, such as descaling, when the outlet (31) of the generator is away from the opening (41) in the body (40).

15. The machine of any preceding claim, further comprising a flavoured beverage preparation module, such as a module for receiving a flavoured ingredient, in particular a flavoured ingredient capsule, and for circulating water through the flavoured ingredient to form a flavoured beverage, in particular tea of coffee.

## Patentansprüche

1. Getränkezubereitungsmaschine (1) mit:
- einem Körper (40) mit einer Öffnung (41); und
- einem Heißwasser- und/oder Dampferzeuger mit einem beweglichen Auslass (31),
wobei der Erzeuger und der Auslass Folgendes aufweisen:
- eine Betriebskonfiguration zur Abgabe von heißem Wasser und/oder Dampf über den Auslass; und
- eine Speicherkonfiguration, in der der Auslass des Erzeugers bewegt und in der Öffnung des Körpers aufgenommen wird,
**dadurch gekennzeichnet, dass** der Körper (40) eine Plattform ausbildet, die zur Aufnahme des Erzeugerauslasses aus der Maschine (1) vorsteht.

2. Maschine gemäß Anspruch 1, wobei der Körper (40) einen Behälter zum Auffangen von Abfallflüssigkeit umfasst, wobei der Körper insbesondere abnehmbar ist.

3. Maschine gemäß Anspruch 1 oder 2, wobei der Körper (40) einen Getränkeabgabebereich begrenzt.

4. Maschine gemäß Anspruch 3, wobei der Körper (40) eine obere Fläche (42) zum Tragen einer Tasse und/oder eines Bechers eines Benutzers aufweist.

5. Maschine gemäß Anspruch 4, wobei die obere Fläche (42) des Körpers (40) durch eine Anordnung zur Entleerung von Abfallflüssigkeit gebildet wird, wie z.B. ein Gitter oder einen oder mehrere Kanäle, die in einen Abfallflüssigkeitsbehälter führen.

6. Maschine gemäß einem der vorhergehenden Ansprüche, wobei sich die Öffnung (41) für den Auslass (31) in einer oberen Fläche (42) des Körpers (40) oder angrenzend an diese befindet.

7. Maschine gemäß Anspruch 6, wobei sich die Öffnung (41) für den Auslass (31) an einem Umfangsteil der oberen Fläche oder angrenzend an dieses befindet.

8. Maschine gemäß einem der vorhergehenden Ansprüche, wobei der Heißwasser- und/oder Dampferzeuger ein vom Benutzer bewegbares Rohr (30) umfasst, das den Auslass (31) trägt.

9. Maschine gemäß Anspruch 8, wobei das Rohr (30) von einem Benutzer von Hand in die Betriebskonfiguration und in die Speicherkonfiguration bewegbar ist.

10. Maschine gemäß Anspruch 8 oder 9, wobei das Rohr (30) in der Speicherkonfiguration im Allgemeinen aufrecht steht.

11. Maschine gemäß einem der Ansprüche 8 bis 10, wobei das Rohr (30) längsbeweglich, insbesondere teleskopartig beweglich ist.

12. Maschine gemäß einem der Ansprüche 8 bis 11, wobei das Rohr (30) schwenkbar ist.

13. Maschine gemäß einem der vorhergehenden Ansprüche, wobei der Wasserund/oder Dampferzeuger eine Reinigungskonfiguration aufweist, wie z.B. eine Entkalkungskonfiguration, bei der der Auslass (31) des Erzeugers bewegt und in der Öffnung (41) des Körpers (40) aufgenommen wird.

14. Maschine gemäß Anspruch 13, mit einer Steuereinheit, die angeordnet ist, um eine Reinigung, wie z.B. Entkalkung, zu verhindern, wenn der Auslass (31) des Erzeugers von der Öffnung (41) in dem Körper (40) weg bewegt ist.

15. Maschine gemäß einem der vorhergehenden Ansprüche, weiterhin mit einem aromatisierten Getränkezubereitungsmodul, wie z.B. einem Modul zur Aufnahme einer Geschmackszutat, insbesondere einer Geschmackszutatenkapsel, und zum Zirkulieren von Wasser durch die Geschmackszutat zur Herstellung eines aromatisierten Getränks, insbesondere Tee oder Kaffee.

## Revendications

1. Machine de préparation de boisson (1) présentant :
- un corps (40) avec une ouverture (41) ; et
- un générateur d'eau chaude et/ou de vapeur comprenant une sortie mobile (31),
le générateur et la sortie présentant :
- une configuration opérationnelle pour distribuer de l'eau chaude et/ou de la vapeur par l'intermédiaire de la sortie ; et
- une configuration de stockage dans laquelle la sortie du générateur est déplacée et reçue dans l'ouverture du corps,
**caractérisée en ce que** le corps (40) forme une plateforme faisant saillie à partir de ladite machine (1) pour recevoir la sortie du générateur.

2. Machine selon la revendication 1, dans laquelle le corps (40) comprend un réservoir destiné à recueillir du liquide résiduel, le corps étant en particulier amovible.

3. Machine selon la revendication 1 ou 2, dans laquelle le corps (40) délimite une zone de distribution de boisson.

4. Machine selon la revendication 3, dans laquelle le corps (40) comprend une face supérieure (42) destinée à supporter un gobelet d'utilisateur et/ou une tasse d'utilisateur.

5. Machine selon la revendication 4, dans laquelle la face supérieure (42) du corps (40) est formée par un agencement destiné à évacuer du liquide résiduel, comme par exemple une grille ou un ou plusieurs canaux menant dans un réservoir de liquide résiduel.

6. Machine selon l'une des revendications précédentes, dans laquelle l'ouverture (41) pour la sortie (31) est située dans une face supérieure (42) du corps (40) ou de manière adjacente à celle-ci.

7. Machine selon la revendication 6, dans laquelle l'ouverture (41) pour la sortie (31) est située sur une partie périphérique de la face supérieure ou de manière adjacente à celle-ci.

8. Machine selon l'une des revendications précédentes, dans laquelle le générateur d'eau chaude et/ou de vapeur comprend un tube (30) déplaçable par un utilisateur comportant ladite sortie (31).

9. Machine selon la revendication 8, dans laquelle le tube (30) est déplaçable manuellement par un utilisateur dans la configuration opérationnelle et dans la configuration de stockage.

10. Machine selon la revendication 8 ou 9, dans laquelle le tube (30) est généralement droit dans la configuration de stockage.

11. Machine selon l'une des revendications 8 à 10, dans laquelle le tube (30) est déplaçable longitudinalement, en particulier déplaçable de manière télescopique.

12. Machine selon l'une des revendications 8 à 11, dans laquelle le tube (30) est apte à pivoter.

13. Machine selon l'une des revendications précédentes, dans laquelle le générateur d'eau chaude et/ou de vapeur présente une configuration de nettoyage, comme par exemple une configuration de détartrage, dans laquelle la sortie (31) du générateur est déplacée et reçue dans l'ouverture (41) du corps (40).

14. Machine selon la revendication 13, qui comprend une unité de commande agencée pour empêcher un nettoyage, comme par exemple un détartrage, lorsque la sortie (31) du générateur est à distance de l'ouverture (41) dans le corps (40).

15. Machine selon l'une des revendications précédentes, comprenant en outre un module de préparation de boisson aromatisée, comme par exemple un module destiné à recevoir un ingrédient aromatisé, en particulier une capsule d'ingrédient aromatisé, et destiné à faire circuler de l'eau à travers l'ingrédient aromatisé pour former une boisson aromatisée, en particulier du thé ou du café.
